# EUROPEAN PATENT APPLICATION

(11) **EP 2 397 750 A1**
(43) Date of publication of application: **21.12.2011**
(21) Application number: 10741114.2
(22) Date of filing: 15.02.2010
(51) Int. Cl.: F21V 5/04, F21S 2/00, G02B 3/00, G02B 3/02, G02B 3/06, H01L 33/58, F21Y 101/02

(54) **LIGHTING DEVICE AND LIGHTING APPARATUS USING SAID LIGHTING DEVICE**

(30) Priority: 13.02.2009 JP 2009030612
(71) Applicant: Sharp Kabushiki Kaisha, Osaka-shi, Osaka 545-8522 (JP)
(72) Inventor: NAGURA, Hideaki, Osaka-shi, Osaka 545-8522 (JP); SAKAI, Kuniaki, Osaka-shi, Osaka 545-8522 (JP); UEDA, Ken, Osaka-shi, Osaka 545-8522 (JP)
(74) Representative: Treeby, Philip David William
(86) International application number: PCT/JP2010/000914
(87) International publication number: WO 2010/092834

(57) **Abstract**

An illumination device of the present invention includes: a light source (12); and an optical member (14) for controlling a light distribution property for light emitted from the light source (12). The optical member (14) has an entrance surface (16) and an emission surface (18) for the light emitted from the light source (12). The optical member (14) includes, on at least one of the entrance surface (16) and the emission surface (18), first lenses each producing a power which varies between an X axis and a Y axis. This arrangement makes it possible to control a light distribution property in two directions, and consequently produce an illumination apparatus which is superior in design and which is high in horizontal illuminance and vertical illuminance.

## Description

### Technical Field

The present invention relates to (i) an illumination apparatus, such as a crime prevention lamp, a road lamp, and a streetlamp, which is high in horizontal illuminance and vertical illuminance, and (ii) an illumination device for use in the illumination apparatus.

### Background Art

There are set up outdoors a large number of illumination apparatuses, such as a crime prevention lamp, for purposes including traffic safety and crime prevention. A crime prevention lamp desirably produces a crime prevention lighting effect which provides (i) the ability to recognize an outline of a face of a person present 4 m ahead and (ii) the ability to recognize a motion and posture of a pedestrian present 4 m ahead. There are provided for the following illuminance standards for producing the above lighting effect: for the ability (i), a mean value of not less than 5.0lx for a road surface horizontal illuminance and a minimum value of not less than 1.0lx for a road surface vertical illuminance; and for the ability (ii), a mean value of not less than 3.0lx for a road surface horizontal illuminance and a minimum value of not less than 0.5lx for a road surface vertical illuminance.

An illumination apparatus such as a crime prevention lamp desirably satisfies the above illuminance standards for a greater distance without increasing an output of a light source. Satisfying the illuminance standards as such can save energy and reduce the number of illumination apparatuses needed to be set up, and can consequently achieve traffic safety and crime prevention efficiently.

Illumination apparatuses such as crime prevention lamps are typically set up on poles such as telephone poles at a height of 4.5 m while spaced apart from one another by an interval of approximately 35 m. In this case, an adjacent illumination apparatus provides, directly under itself at a height of 1.5 m from a road surface, a vertical illuminance which is determined by a luminous intensity in a substantially horizontal direction of 85º with respect to the illumination apparatus. Illuminance decreases in inverse proportion to the square of distance. Thus, unless a light distribution property of the illumination apparatus is controlled so that the luminous intensity in the substantially horizontal direction is increased, it is difficult to achieve illuminance which satisfies the above illuminance standards.

Patent Literatures 1 and 2 each disclose a method as a technique for controlling a light distribution property of an illumination apparatus. Patent Literatures 1 and 2 each disclose an illumination apparatus including a prism formed in (i) a reflecting member called a reflector and (ii) a cover of the illumination apparatus. Timely combining the reflector with the cover controls the light distribution property so as to increase a luminous intensity in a horizontal direction.

### Citation list

Patent Literature 1
   Japanese Patent Application Publication, Tokukai, No. 2000-331504 A
Patent Literature 2
   Japanese Patent Application Publication, Tokukai, No. 2004-63174 A

### Summary of Invention

### Technical Problem

The above conventional illumination apparatuses, however, have problem described below.

Recent years have witnessed development of a large number of illumination apparatuses each including an LED light source for electric power conservation and a longer life. An LED light source-equipped illumination apparatus normally includes an alignment of a large number of LED light sources so as to secure an installed flux, and thus requires a large light source area.

Since the light source area in the above case has a larger proportion with respect to respective areas of the reflector and the prism, light enters the reflector and the prism in various directions.

The reflector and the prism are, however, each shaped so as to, when light is incident at a particular angle, reflect or refract the light at a particular angle. The reflector and the prism are thus difficult to shape for a case where light is incident in various directions.

The above case thus problematically makes it difficult to control a light distribution property so as to produce an illumination apparatus having a superior optical property. On the other hand, in a case where the reflector and the prism each have a larger area so that the light source area has a smaller proportion in order to avoid the above problem, an illumination apparatus to be produced is problematically larger in size.

For an illumination apparatus designed to be set up on, for example, a road, it is important to control light distribution on two planes: a plane parallel to a travelling direction of a road and a plane parallel to a width direction of the road. The prism disclosed in each of the above conventional art documents is, however, shaped so as to extend in a single direction. The prism thus has a problem that it is merely capable of controlling a light distribution property on a single plane, for example, a plane parallel to the travelling direction of a road.

Controlling a light distribution property on two planes requires a combinational use of a reflector, and thus requires a larger number of components. An alternative method of using a housing of an illumination apparatus as a reflector unfortunately prevents free design of a housing.

### Solution to Problem

In order to solve the above problems, an illumination device according to an embodiment of the present invention includes: a light source such as an LED and an LD; and a transparent optical member having an entrance surface and an emission surface both for light emitted from the light source, the optical member including, on at least one of the entrance surface and the emission surface, first lenses each producing a power, that is, an ability of the lens to bend light, which varies between (i) an X axis direction and (ii) a Y axis direction perpendicular to the X axis direction, where a Z axis direction is an optical axis direction for the lens.

The light source emits light, which enters the optical member and is thus bent by refraction at the entrance surface and the emission surface of the optical member. In the illumination device of the present invention, the optical member includes, on at least one of the entrance surface and the emission surface, first lenses each producing a power which varies between the X axis direction and the Y axis direction. The illumination device can thus control orientation of light independently for the X axis and the Y axis. This arrangement consequently makes it possible to control a light distribution property for the two axis directions, that is, the X axis direction and the Y axis direction, with use of a single optical member.

An illumination device of an embodiment may be arranged such that the first lenses include a columnar concave lens formed on a first surface and a columnar convex lens formed on a second surface opposite to the first surface; and the columnar concave lens has a first generating line and the columnar convex lens has a second generating line, the first and second generating lines intersecting orthogonally to each other.

In the illumination device of this embodiment, the columnar concave lens and the columnar convex lens are arranged orthogonally to each other. Controlling respective cross-sectional shapes, along respective generated line directions, of the columnar concave lens and the columnar convex lens makes it possible to control a light distribution property for a cross section of each individual lens separately which cross section is parallel to the generated line direction.

Further, neither the columnar concave lens nor the columnar convex lens requires an expensive, three-shaft processor. This reduces a cost of a mold.

An illumination device of an embodiment may be arranged such that the first lenses include an elliptic concave lens or an elliptic convex lens.

Controlling respective cross-sectional shapes of the ellipse along a major axis direction and a minor axis direction makes it possible to control a light distribution property for a cross section parallel to either the major axis direction or the minor axis direction independently.

An illumination device of an embodiment may be arranged such that the light source has an optical axis shifted away from a geometric central axis of a first lens formed on at least one of the entrance surface and the emission surface.

According to this embodiment, the light source has an optical axis shifted away from an optical axis of the first lens. This makes it possible to control a light distribution property on the basis of a center shifted away from a direction of the optical axis of the light source. In other words, the above arrangement makes it possible to spread or narrow light preferentially in a direction inclined from the direction of the optical axis of the light source.

In a case where the illumination device is included in an illumination apparatus in which light sources are to be arranged in, for example, a V-shape, light can be spread efficiently.

An illumination apparatus of an embodiment includes a plurality of the illumination device arranged in an array, on a plane or the like.

The illumination apparatus is compact and finds various applications.

Additional objects, features, and strengths of the present invention will be made clear by the description below. Further, the advantages of the present invention will be evident from the following explanation in reference to the drawings.

### Advantageous Effects of Invention

The illumination device and the illumination apparatus of the present invention can each control a light distribution property for two axis directions with use of only a single optical member so as to optimize the light distribution property. The present invention consequently provides an illumination apparatus which does not include, for example, a reflector and is thus superior in design and which is high in horizontal illuminance and vertical illuminance.

In the illumination device of the present invention, the light source is shifted away from the geometric central axis of the first lens. This arrangement makes it possible to spread or narrow light preferentially in a direction inclined from a normal line direction for a plane on which the light source is provided. In a case where the illumination device is included in an illumination apparatus in which light sources are to be arranged slantingly, for example, in a V-shape, light can be spread efficiently. As such, it is possible to produce an illumination apparatus which is further superior in light distribution property.

Even in a case where there are included a plurality of light sources in a large light source area, the illumination device is compact. An illumination apparatus including the illumination device is thus not large in size and is superior in light distribution property.

### Brief Description of Drawings

Fig. 1

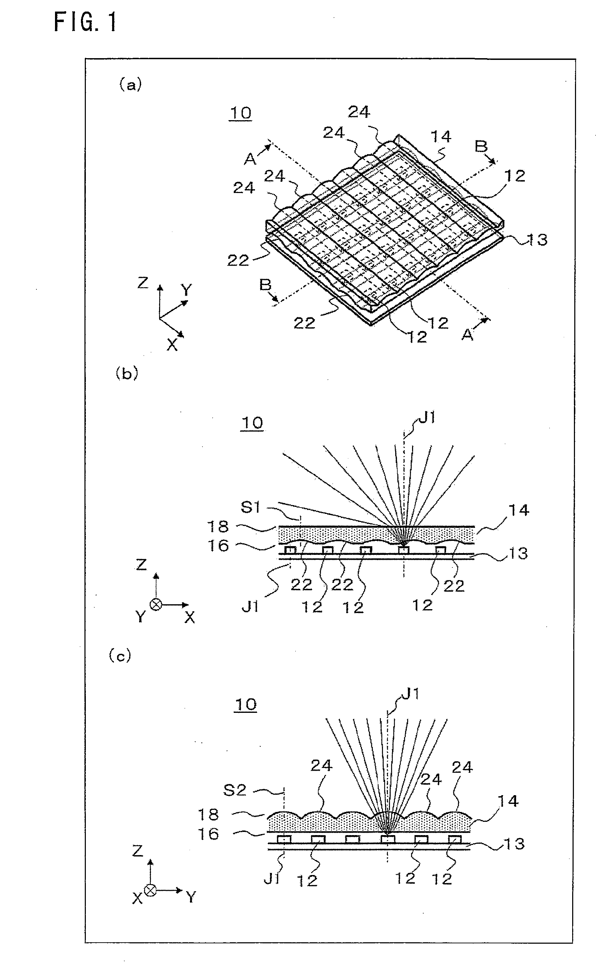

   Fig. 1 is a view illustrating an illumination device of Embodiment 1 of the present invention, where (a) is a perspective view of the illumination device, (b) is a cross-sectional view taken along line A-A of (a), and (c) is a cross-sectional view taken along line B-B of (a).
Fig. 2

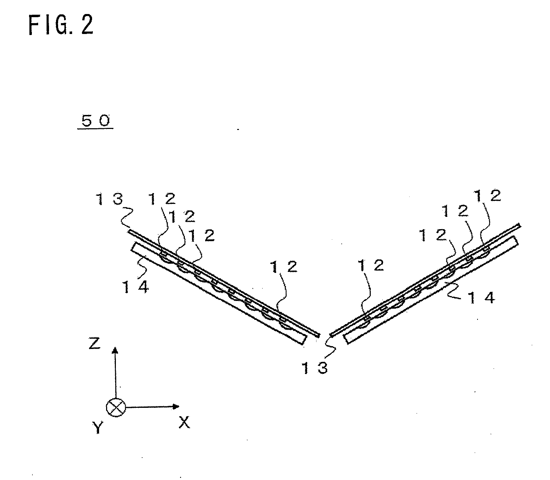

   Fig. 2 is a view illustrating an example of an illumination apparatus including the illumination device of the present invention.
Fig. 3

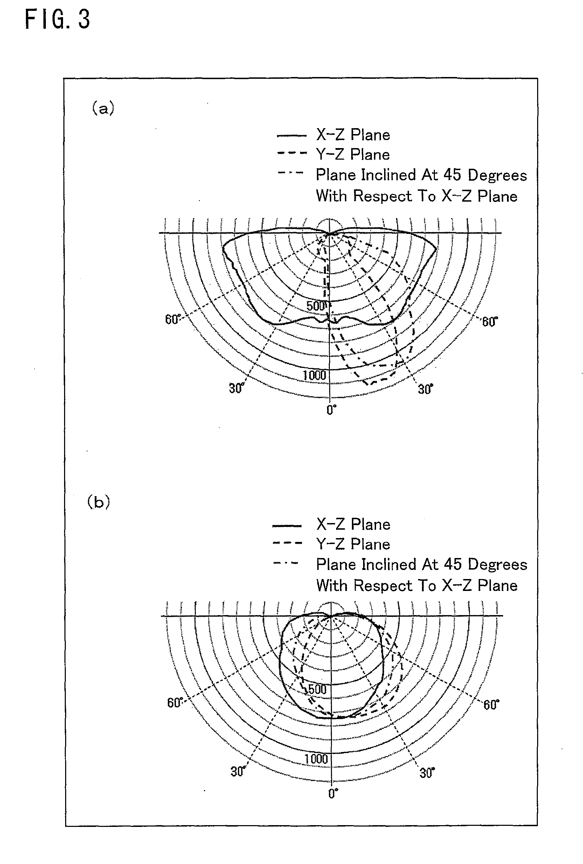

   Fig. 3 is a graph illustrating results of light distribution property simulations, where (a) illustrates a result of a light distribution property simulation for a case in which the illumination device of Embodiment 1 is included in the illumination apparatus illustrated in Fig. 2, and (b) illustrates a result of a light distribution property simulation for a comparative example.
Fig. 4

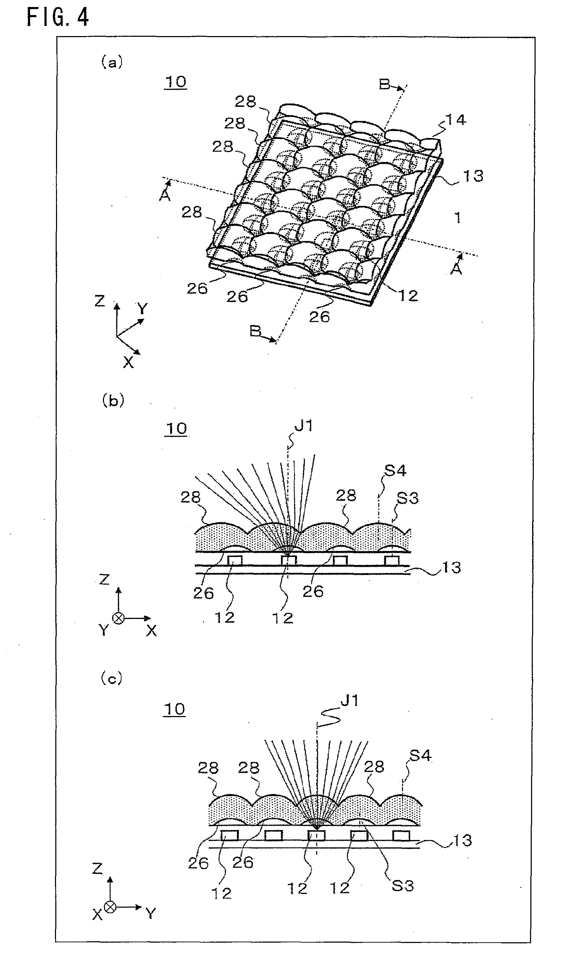

   Fig. 4 is a view illustrating an illumination device of Embodiment 2 of the present invention.
Fig. 5

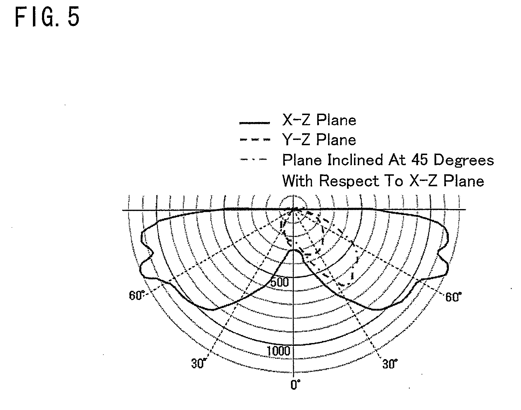

   Fig. 5 is a graph illustrating a result of a light distribution property simulation for a case in which the illumination device of Embodiment 2 is included in the illumination apparatus illustrated in Fig. 2.

### Description of Embodiments

The present invention is described below in detail in reference to embodiments.

In the description below, a member identical in function and effect to a previously described member is assigned the same reference numeral and is not described.

### (Embodiment 1)

Fig. 1 illustrates an outline of an illumination device 10 of Embodiment 1. (a) is a perspective view of the illumination device 10, (b) is a cross-sectional view taken along line A-A of (a), and (c) is a cross-sectional view taken along line B-B of (a).

The embodiments below each use an LED as a light source. The present invention can, however, be implemented with use of a different light source such as a laser diode instead of an LED.

Fig. 1 illustrates an optical member 14 which includes (i) columnar concave lenses 22 formed on an entrance surface 16 that faces LED light sources 12 and (ii) columnar convex lenses 24 formed on an emission surface 18 that is opposite to the entrance surface 16.

Fig. 1 indicates (i) a Z axis corresponding to an axis direction in which light is incident and emitted, (ii) a Y axis corresponding to a generating line direction for the columnar concave lenses 22, and (iii) an X axis corresponding to a generated line direction for the columnar concave lenses 22. The X axis corresponds to a generating line direction for the columnar convex lenses 24, whereas the Y axis corresponds to a generated line direction for the columnar convex lenses 24.

The columnar concave lenses 22 each have (i) a curvature of 0 in its generating line direction and (ii) a curvature of less than 0 in its generated line direction. The columnar concave lenses 22 each have a power, that is, an ability of a lens to bend light, which varies between the X axis direction and the Y axis direction.

Similarly, the columnar convex lenses 24 each have (i) a curvature of 0 in its generating line direction and (ii) a curvature of greater than 0 in its generated line direction. The columnar convex lenses 24 each have a power, that is, an ability of a lens to bend light, which varies between the X axis direction and the Y axis direction.

The respective generating line directions for the columnar concave lenses 22 and the columnar convex lenses 24 are orthogonal to each other.

The illumination device 10 of the present embodiment is configured such that (i) the LED light sources 12 are provided in a matrix pattern on a substrate 13, which is, for example, a printed circuit board, and that (ii) the columnar concave lenses 22 and the columnar convex lenses 24 are arranged to intersect each other at intersections which are in a one-to-one correspondence with the individual LED light sources 12.

The columnar concave lenses 22, provided on the surface facing the LED light sources 12, secure a space between the LED light sources 12 and the optical member 14.

The columnar concave lenses 22 are thus effective not only in controlling a light distribution property, which is a main object of the present invention, but also in preventing the optical member 14 from being impaired by heat generated by the LED light sources 12.

Although it is possible to prevent impairment of the optical member 14 by securing a distance between (i) the entrance surface 16, which is a lower surface of the optical member 14, and (ii) the LED light sources 12, it is in such a case difficult to control a light distribution property because respective light beams emitted from the LED light sources 12 arranged in an array as in the present embodiment each more likely enter a lens adjacent to a lens that the light beam is intended to enter.

Since there is a limit to the distance between (i) the entrance surface 16, which is a lower surface of the optical member 14, and (ii) the LED light sources 12, the present invention provides the columnar concave lenses 22 so as to increase the above space and consequently prevent the optical member 14 from being impaired by heat generated by the LED light sources 12.

The columnar concave lenses 22 are, as illustrated in (b) of Fig. 1, shaped so as to spread light. Light emitted from the LED light sources 12 and incident on the columnar concave lenses 22 is spread by the columnar concave lenses 22 on an X-Z plane.

In a cross section along the corresponding generated line direction, the columnar concave lenses 22 of Embodiment 1 each have, for example, an elliptic shape with a major axis of 6.5 mm and a distance of 8.0 mm between its two focal points.

The columnar concave lenses 22 each have a geometric central axis S1, whereas the LED light sources 12 each have an optical axis J1, which is parallel to the Z axis direction corresponding to a central axis for intensity distribution. The geometric central axis S1 is shifted away from the optical axis J1 in the X axis direction, which corresponds to the generating line direction for the columnar convex lenses 24.

The illumination device 10 of the present invention, configured as above, can spread light on the basis of a central axis different from the optical axis J1 of the LED light sources 12. In other words, the optical axis J1 of the LED light sources 12 is shifted away from the geometric central axis S1 of the columnar concave lenses 22 in the generating line direction for the columnar convex lenses 24 so that light can be spread while weighted in a -X direction or a +X direction.
(c) of Fig. 1 illustrates a cross section taken along line B-B of (a) of Fig. 1, that is, a cross section of the optical member 14 taken along an Y-Z plane.

The columnar convex lenses 24 are shaped so as to narrow light. Light emitted from the LED light sources 12 and incident on the columnar convex lenses 24 is narrowed by the columnar convex lenses 24 on the Y-Z plane.

In a cross section taken along the corresponding generated line direction, the columnar convex lenses 24 of Embodiment 1 each have, for example, a circular shape having a radius of 6 mm. The optical axis J1 of the LED light sources 12 coincides with a geometric central axis S2 of the columnar convex lenses 24.

As with the columnar concave lenses 22, the geometric central axis S2 of the columnar convex lenses 24 can alternatively be shifted away from the optical axis J1 of the LED light sources 12 in the Y axis direction, which corresponds to the generating line direction for the columnar concave lenses 22, so that light can be narrowed in a -Y direction or a +Y direction.

Thus, in a case where a direction of light narrowed on the Y-Z plane is to be controlled, the optical axis J1 of the LED light sources 12 may be shifted away from the geometric central axis S2 of the columnar convex lenses 24.

Optical analyzing software, for example, is used, in consideration of a required light distribution property, to determine, for example, (i) the respective shapes of the columnar concave lenses 22 and the columnar convex lenses 24 and (ii) respective distances from the optical axis J1 of the LED light sources 12 to the geometric central axis S1 of the columnar concave lenses 22 and to the geometric central axis S2 of the columnar convex lenses 24.

The optical member 14 is simply required to be made of a material, such as acrylic resin, polystyrene resin, methacryl resin, polycarbonate resin, and glass, which is high in transparency within a visible light range and which is high in transmittance.

In the above illumination device 10, light emitted from the LED light sources 12 is controlled for light distribution by the columnar concave lenses 22 and the columnar convex lenses 24 formed in the optical member 14.

The columnar concave lenses 22 have the function of spreading light, whereas the columnar convex lenses 24 have the function of narrowing light. Further, since the respective generating line directions for the columnar concave lenses 22 and for the columnar convex lenses 24 are orthogonal to each other, it is possible to control a light distribution property, with use of only the optical member 14, separately on the two individual planes, that is, the X-Z plane and the Y-Z plane.

Since the columnar concave lenses 22 and the columnar convex lenses 24 formed in the optical member 14 are in a one-to-one correspondence with the individual LED light sources 12, the optical member 14 is identical in size to a single light source array. The above arrangement thus downsizes an illumination apparatus and reduces its thickness.

Fig. 2 is a view schematically illustrating an illumination apparatus 50 including an illumination device of the present invention.

The illumination apparatus 50 includes illumination devices 10, described above in the present embodiment, in a V-shape so that light is emitted in a direction downward in Fig. 2.

The illumination apparatus 50 includes a plurality of LED light sources 12 in an array on substrates 13 so as to produce a light source luminous flux which is equivalent to that of any illumination apparatus including a different light source such as a fluorescent lamp.

The present embodiment is an example including two illumination devices 10 arranged to form a V-shape on the X-Z plane, the illumination devices 10 each including LED light sources 12 in an array of 8 (in the X axis direction with a pitch of 11 mm) by 28 (in the Y axis direction with a pitch of 8.5 mm).

The illumination apparatus 50 thus includes a total of 448 LED light sources 12 and produces a total light source luminous flux of 2800 1m. The two illumination devices 10 arranged in a V-shape form an in-between angle of 120º. The number of the LED light sources 12 and the luminous flux are changed as appropriate according to an amount of luminous flux necessary for an intended illumination apparatus. The in-between angle formed by the illumination devices 10 are changed as appropriate depending on, for example, a housing or a cover (not shown), each of which is a necessary part of design of an illumination apparatus.

The illumination apparatus 50 includes illumination devices 10 arranged in a V-shape, the illumination devices 10 each including a plurality of LED light sources 12 provided in a matrix pattern on a corresponding substrate 13. With this configuration, in a case where the illumination devices 10 are combined with each other so that respective light beams emitted from the illumination devices 10 are spread respectively in the -X axis direction and the +X axis direction, it possible to cause light emitted from the illumination apparatus to spread efficiently in the ±X axis directions.
(a) of Fig. 3 illustrates a result of simulating a light distribution property of the illumination apparatus 50 of Embodiment 1. (b) of Fig. 3 illustrates a result of simulating a light distribution property of an illumination apparatus which includes no optical member 14 and which thus serves as a comparative example.

The simulation was carried out in consideration of how illumination apparatuses 50 are set up in actuality on, for example, a road. Specifically, the simulation was carried out for a case in which the illumination apparatuses 50 are each set up at an angle of elevation of 20º, that is, the illumination apparatuses 50 are each inclined at an angle of 20º with respect to the X axis serving as a rotation axis.

The illumination apparatus 50 of the present embodiment, illustrated in Fig. 2, spreads light on the X-Z plane with use of the columnar concave lenses 22 in the optical member 14. Fig. 3 indicates that, assuming that a side from 0º to 90º is a wider angle side, the illumination apparatus 50 is large in luminous intensity for the wider angle as compared to the comparative example. Further, the illumination apparatus 50 narrows light on the Y-Z plane with use of the columnar convex lenses 24 in the optical member 14. Fig. 3 indicates that the illumination apparatus 50 is narrow in light distribution property as compared to the comparative example.

Table 1 shows a result of simulating an illuminance of the illumination apparatus 50 of Embodiment 1 for a case in which it is set up on a road. Table 1 further shows a result of simulating an illuminance of an illumination apparatus which includes no optical member 14 and which thus serves as a comparative example.

**Table 1: Results of analyzing illuminance**

| | Embodiment 1 | Comparative example |
|---|---|---|
| Horizontal illuminance (mean value) | 7.40 lx | 5.08 lx |
| Vertical illuminance (minimum value) | 0.60 lx | 0.20 lx |

Table 1 shows (i) a horizontal illuminance, which corresponds to a mean value of road surface horizontal illuminances and (ii) a vertical illuminance, which corresponds to a minimum value among vertical illuminances along a center of the road at a height of 1.5 m. The illumination apparatuses 50 are set up at a height of 4.5 m while spaced apart from one another by an interval of 35 m so that the X-Z plane of Fig. 1 is parallel to a travelling direction of the road.

Illumination apparatuses as illustrated in Fig. 2 are each set up at an angle of elevation of 20º as in the light distribution property simulation. The road is 5 m wide.

The simulation results show that the illumination apparatus of Embodiment 1, which has an optimized light distribution property as illustrated in (a) of Fig. 3, has a high illuminance as compared to the comparative example. The simulation results also show that the illumination apparatus of Embodiment 1 satisfies the above-mentioned illuminance standards, that is, (i) the ability to recognize an outline of a face of a person present 4 m ahead (a mean value of not less than 5.0lx for a horizontal illuminance and a minimum value of not less than 1.0lx for a vertical illuminance) and (ii) the ability to recognize a motion and posture of a pedestrian present 4 m ahead (a mean value of not less than 3.0lx for a horizontal illuminance and a minimum value of not less than 0.5lx for a vertical illuminance).

As described above, the illumination apparatus of Embodiment 1 can, with use of only the optical member 14 including the columnar concave lenses 22 and the columnar convex lenses 24, control a light distribution property on two planes so as to optimize the light distribution property. This makes it possible to produce, without increasing an output of a light source, an illumination apparatus which is high in horizontal illuminance and vertical illuminance. As a result, it is possible to save energy and reduce the number of illumination apparatuses needed to be set up.

The present embodiment further eliminates the need to use, for example, a housing as a reflector, and thus makes it possible to produce an illumination apparatus superior in design.

Even in a case where there are included LED light sources in an array that requires a large light source area, the present embodiment, which includes lenses in correspondence with the respective LED light sources, makes it possible to produce an illumination apparatus superior in light distribution property while preventing an increase in size of the illumination apparatus.

Embodiment 1 may further include, for example, (i) a housing for fixing a power source section and light sources for the illumination apparatus 50 and (ii) a cover. Such a housing and a cover can protect light sources and an optical member from rain, dust and the like in a case where the illumination apparatus is used outdoors, for example.

The illumination device and the illumination apparatus including the illumination device of Embodiment 1 can each be widely used as, among other lamps, an outdoor lamp such as a crime prevention lamp, a streetlamp, a road lamp, and a park lamp.

### (Embodiment 2)

The following description deals with Embodiment 2 of an illumination apparatus of the present invention.

Embodiment 2 differs from Embodiment 1 only in the shape of the optical member 14, included in the illumination device of Embodiment 1. Thus, in Embodiment 2, a member identical to a corresponding member in Embodiment 1 above is assigned the same reference numeral, and Embodiment 2 mainly describes how it differs from Embodiment 1.
(a) of Fig. 4 illustrates a shape of an optical member 14 of Embodiment 2. The optical member 14 of Embodiment 2 includes (i) elliptic concave lenses 26 formed on a surface facing LED light sources 12 and (ii) elliptic convex lenses 28 formed on a surface opposite to the surface facing the LED light sources 12. The elliptic concave lenses 26 and the elliptic convex lenses 28 are formed of a plurality of lenses which are in a one-to-one correspondence with the individual LED light sources 12.

The elliptic convex lenses 28 each have a minor axis direction which coincides with a Y axis direction for an illumination device 10 illustrated in Fig. 4.

Both the elliptic concave lenses 26 and the elliptic convex lenses 28 each have a first curvature along an X axis and a second curvature along the Y axis, which extends in a direction perpendicular to the X axis, the first and second curvatures being different from each other. In other words, the present invention includes lenses each having a power, that is, an ability of a lens to bend light, which varies between the X axis direction and the Y axis direction.

The elliptic concave lenses 26 of Embodiment 2 each have, for example, an elliptic shape with a major axis of 5 mm and a distance of 0 mm between its two focal points, that is, the elliptic concave lenses 26 each have a spherical shape. The elliptic convex lenses 28 each have an elliptic shape with a major axis of 6.5 mm and a distance of 8 mm between its two focal points.
(b) of Fig. 4 is a cross section taken along line A-A of (a) of Fig. 4, that is, a cross section of the illumination device 10 taken along an X-Z plane. The elliptic concave lenses 26 each have, on the X-Z plane, a cross-sectional shape which spreads light.

Light emitted from the LED light sources 12 and incident on the elliptic concave lenses 26 is thus spread by the elliptic concave lenses 26 on the X-Z plane. The LED light sources 12 each have an optical axis J1, whereas the elliptic convex lenses 28 each have a geometric central axis S4, the optical axis J1 being shifted away from the geometric central axis S4 in the X axis direction, which corresponds to a major axis direction for the elliptic convex lenses 28.

The above configuration makes it possible to spread light on the basis of a center along a direction different from a direction of the geometric central axis S4 of the elliptic convex lenses 28. In other words, the optical axis J1 of the LED light sources 12 is shifted away from the geometric central axis S4 of the elliptic convex lenses 28 in the X axis direction, corresponding to the major axis direction for the elliptic convex lenses 28, so that light can be spread in a -X direction or a +X direction.

The elliptic concave lenses 26 each have a geometric central axis S3 which coincides with the optical axis J1 of the LED light sources 12. This intends to secure a space between the LED light sources 12 and the optical member 14 with use of the elliptic concave lenses 26 so as to prevent the optical member 14 from being impaired by heat generated by the LED light sources 12.

Embodiment 2 makes it possible to control a light distribution property even with use of only the elliptic convex lenses 28. The elliptic concave lenses 26 are thus shaped and arranged so as to mainly prevent impairment of the optical member 14. The elliptic concave lenses 26 may be omitted in a case where the optical member 14 is high in heat resistance. This omission is preferable because it facilitates production of the optical member 14.

The elliptic concave lenses 26 may be shaped and arranged as appropriate so as to control light distribution in combination with the elliptic convex lenses 28. This arrangement is preferable because it increases the degree of freedom for an achievable light distribution property.
(c) of Fig. 4 is a cross section taken along line B-B of (a) of Fig. 4, that is, a cross section of the optical member 14 taken along a Y-Z plane. The elliptic convex lenses 28 each have, on the Y-Z plane, a shape which narrows light. Light emitted from the LED light sources 12 and incident on the elliptic convex lenses 28 is thus narrowed by the elliptic convex lenses 28 on the Y-Z plane.

The optical axis J1 of the LED light sources 12 coincides with the geometric central axis S4 of the elliptic convex lenses 28 on the Y-Z plane.

The optical axis J1 of the LED light sources 12 is shifted, on the Y-Z plane as well, away from the geometric central axis S4 of the elliptic convex lenses 28 in the Y axis direction, corresponding to the minor axis direction for the elliptic convex lenses 28, so that light can be narrowed in a -Y direction or a +Y direction.

Thus, in a case where a direction of light narrowed on the Y-Z plane is to be controlled, the optical axis J1 of the LED light sources 12 may be shifted away from the geometric central axis S3 of the elliptic concave lenses 26.

Optical analyzing software, for example, is used, in consideration of a required light distribution property, to determine, for example, (i) the respective shapes of the elliptic concave lenses 26 and the elliptic convex lenses 28 and (ii) respective distances from the optical axis J1 of the LED light sources 12 to the geometric central axis S3 of the elliptic concave lenses 26 and to the geometric central axis S4 of the elliptic convex lenses 28.

In the above illumination device, light emitted from the LED light sources 12 is controlled for light distribution by the elliptic concave lenses 26 and the elliptic convex lenses 28 included in the optical member 14.

The elliptic convex lenses 28 each have (i) on the X-Z plane, a first cross-sectional shape which achieves the function of spreading light and (ii) on the Y-Z plane, a second cross-sectional shape which achieves the function of narrowing light.

It is thus possible to control a light distribution property, with use of only the optical member 14, separately on the two individual planes, that is, the X-Z plane and the Y-Z plane. Since the elliptic concave lenses 26 and the elliptic convex lenses 28 formed in the optical member 14 are in a one-to-one correspondence with the individual LED light sources 12, the optical member 14 is substantially identical in size to an array of the LED light sources 12. The above arrangement thus downsizes an illumination apparatus and reduces its thickness.

Fig. 5 illustrates a result of a light distribution property simulation for a case in which the illumination device of Embodiment 2 is, as in Embodiment 1, included in the illumination apparatus 50 of Fig. 2. The simulation had conditions and the like identical to those of Embodiment 1.

The illumination apparatus of Embodiment 2 spreads light on the X-Z plane with use of the cross section, taken along the major axis direction, of the elliptic convex lenses 28 in the optical member 14. Fig. 5 indicates that, assuming that a side from 0º to 90º is a wider angle side, the illumination apparatus is large in luminous intensity for the wider angle as compared to the comparative example. Further, the illumination apparatus narrows light on the Y-Z plane with use of the cross section of the elliptic convex lenses 28 taken along the minor axis direction. Fig. 5 indicates that the illumination apparatus is narrow in light distribution property as compared to the comparative example.

Table 2 shows a result of simulating an illuminance of the illumination apparatus of Embodiment 2 for a case in which it is set up on a road. Table 2 further shows a result of simulating an illuminance of an illumination apparatus which includes no optical member 14 and which thus serves as a comparative example. The simulation had conditions and the like identical to those of Embodiment 1.

**Table 2: Results of analyzing illuminance**

| | Embodiment 2 | Comparative example |
|---|---|---|
| Horizontal illuminance (mean value) | 7.06 lx | 5.08 lx |
| Vertical illuminance (minimum value) | 0.85 lx | 0.20 lx |

The simulation results show that the illumination apparatus of Embodiment 2, which has an optimized light distribution property as illustrated in the graph of Fig. 5, has a high illuminance as compared to the comparative example. The simulation results also show that the illumination apparatus of Embodiment 2 satisfies the above-mentioned illuminance standards, that is, (i) the ability to recognize an outline of a face of a person present 4 m ahead (a mean value of not less than 5.0lx for a horizontal illuminance and a minimum value of not less than 1.0lx for a vertical illuminance) and (ii) the ability to recognize a motion and posture of a pedestrian present 4 m ahead (a mean value of not less than 3.0lx for a horizontal illuminance and a minimum value of not less than 0.5lx for a vertical illuminance).

As described above, the illumination apparatus including the illumination device of Embodiment 2 can, with use of only the optical member 14 including the elliptic concave lenses 26 and the elliptic convex lenses 28, control a light distribution property on two planes so as to optimize the light distribution property.

The above arrangement makes it possible to produce, without increasing an output of a light source, an illumination apparatus which is high in horizontal illuminance and vertical illuminance. As a result, it is possible to save energy and reduce the number of illumination apparatuses needed to be set up.

The present embodiment further eliminates the need to use, for example, a housing as a reflector, and thus makes it possible to produce an illumination apparatus superior in design.

Even in a case where there are included LED light sources in an array that requires a large light source area, the present embodiment, which includes lenses in correspondence with the respective LED light sources, makes it possible to produce an illumination apparatus superior in light distribution property while preventing an increase in size of the illumination apparatus.

Embodiment 2 may further include, for example, (i) a housing for fixing a power source section and light sources for the illumination apparatus and (ii) a cover. Such a housing and a cover can protect light sources and an optical member from rain, dust and the like and consequently prevent the illumination apparatus from, for example, a breakdown in a case where the illumination apparatus is used outdoors, for example.

The illumination device and the illumination apparatus including the illumination device of Embodiment 2 can each be widely used as, among other lamps, an outdoor lamp such as a crime prevention lamp, a streetlamp, a road lamp, and a park lamp.

The present invention is not limited to the description of the embodiments above, but may be altered in various ways by a skilled person within the scope of the claims. Any embodiment based on a proper combination of technical means disclosed in different embodiments is also encompassed in the technical scope of the present invention.

### Industrial Applicability

The present invention is widely applicable to an illumination device for outdoor use such as a crime prevention lamp, a streetlamp, a road lamp, and a park lamp, and to various illumination apparatuses such as an illumination apparatus including the illumination device.

### Reference Signs List

- 10: illumination device
- 12: LED light source
- 13: substrate
- 14: optical member
- 16: entrance surface
- 18: emission surface
- 22: columnar concave lens
- 24: columnar convex lens
- 26: elliptic concave lens
- 28: elliptic convex lens
- 50: illumination apparatus
- S1: geometric central axis of columnar concave lens 22
- S2: geometric central axis of columnar convex lenses 24
- S3: geometric central axis of elliptic concave lenses 26
- S4: geometric central axis of elliptic convex lenses 28
- J1: optical axis of LED light source 12

## Claims

1. An illumination device, comprising:
a light source; and
an optical member having an entrance surface and an emission surface both for light emitted from the light source,
the optical member including, on at least one of the entrance surface and the emission surface, first lenses each producing a first power along an X axis and a second power along a Y axis, the first and second powers being different from each other.

2. The illumination device according to claim 1,
wherein:
the first lenses include a columnar concave lens formed on a first surface and a columnar convex lens formed on a second surface opposite to the first surface; and
the columnar concave lens has a first generating line and the columnar convex lens has a second generating line, the first and second generating lines intersecting orthogonally to each other.

3. The illumination device according to claim 1,
wherein:
the first lenses include an elliptic concave lens or an elliptic convex lens.

4. The illumination device according to claim 1,
wherein:
the light source has an optical axis shifted away from a geometric central axis of a first lens formed on at least one of the entrance surface and the emission surface.

5. An illumination apparatus, comprising:
the illumination device recited in any one of claims 1 to 4.
